# EUROPEAN PATENT SPECIFICATION

(11) **EP 2 423 540 B1**
(45) Date of publication and mention of the grant of the patent: **02.10.2013**
(21) Application number: 11176776.0
(22) Date of filing: 08.08.2011
(51) Int. Cl.: F16J 15/14, F16J 15/00

(54) **Seal Structure**
Dichtungsstruktur
Structure de joint

(30) Priority: 25.08.2010 JP 2010188158
(43) Date of publication of application: 29.02.2012
(73) Proprietor: Aisin Seiki Kabushiki Kaisha, Aichi 448-8650 (JP)
(72) Inventor: Kurita, Hirotaka, Kariya-shi, Aichi 448-8650 (JP); Matsushima, Kazuya, Kariya-shi, Aichi 448-8650 (JP)
(74) Representative: Kramer - Barske - Schmidtchen

(56) References cited:
- EP-A1- 1 522 769
- EP-A1- 1 701 069
- EP-A1- 1 983 234
- EP-A2- 1 235 008

## Description

### TECHNICAL FIELD

This disclosure relates to a seal structure.

### BACKGROUND DISCUSSION

Generally, a known seal structure of a mating portion of three mating surfaces includes a first member, a second member, a gasket positioned so as to be sandwiched by the first member and the second member, a third member disposed so as to face, via a liquid gasket, the first member, the second member and a clearance therebetween (see EP-A-1235008).

For example, a known seal structure of a portion where three surfaces are abutted to one another is disclosed in JPH7-167302A (i.e., hereinafter referred to as Patent reference 1). The seal structure disclosed in the Patent reference 1 includes a first member and a second member fastened to each other by means of a bolt while sandwiching a gasket therebetween. An end portion of the abutting portion is located away from a bolt-fastened portion of the abutting portion, and thus the first member and the second member are in a cantilever state, that is, the first member and the second member are not fastened to each other at the end portion of the abutting portion. A main bead and a sub bead, that is, two lines of beads, are provided at the end portion of the mating portion.

Another known seal structure of a portion where three surfaces are abutted to one another is disclosed in JP2009-264476A (i.e., hereinafter referred to as Patent reference 2). According to the seal structure disclosed in the Patent reference 2, a first member and a third member are abutted to each other via a liquid seal material, and a second member and the third member are abutted to each other via the liquid seal material. A sealing surface of the third member includes a recessed portion for guiding liquid seal material that is to be filled with the liquid seal material.

However, according to the seal structure of the Patent reference 1, at a portion where the bead is provided so as to cross the portion where the first member and the second member are abutted together, a step and a gap that are attributed to the assembly may be generated between the first member and the second member, or a step or the like may be generated between the first member and the second member due to a heat deformation. As a result, the bead may not correspond to or follow sudden or partial changes in a sealing surface, and thus the gap or the step may be generated, which may reduce a sealing performance.

According to the seal structure of the Patent reference 2, at the sealing surface between the first member and the third member, and at the sealing surface between the second member and the third member, the recessed portion for guiding liquid seal material is filled with the liquid seal material. Thus, oil may leak out via or along the liquid seal material.

A need thus exists for a seal structure which restricts a reduction in a sealing performance attributed to a gap generated between sealing surfaces and which restricts fluid, including oil but not limited thereto, from leaking out of the seal structure via or along a liquid gasket.

### SUMMARY

According to an aspect of this disclosure, a seal structure includes a first member including a first mating surface, a second member connected with the first member and including a second mating surface, a third member connected with the first member and with the second member and including a third mating surface, and a liquid gasket interposed between the first mating surface and the third mating surface and between the second mating surface and the third mating surface, wherein at least one of the first mating surface, the second mating surface and the third mating surface is formed with a chamber separating the liquid gasket.

Accordingly, by providing the liquid gasket between the first mating surface and the third mating surface, and between the second mating surface and the third mating surface, a step or a gap generated between the mating surfaces due to an assembly is filled by the liquid gasket, and thus a reduction of a sealing performance may be restricted. In addition, at least one of the first mating surface, the second mating surface and the third mating surface is formed with the chamber separating the liquid gasket. Thus, the chamber accumulates a liquid that leaks via or along the liquid gasket and comes into the chamber, and restricts the liquid in the chamber from leaking out of the chamber.

According to another aspect of this disclosure, the first member includes a first recessed portion formed on the first mating surface, the second member includes a second recessed portion formed on the second mating surface and facing the first recessed portion, the third member includes a third recessed portion formed on the third mating surface and facing the first recessed portion and the second recessed portion, and the chamber is constituted by the first recessed portion, the second recessed portion and the third recessed portion.

Accordingly, the chamber is constituted by the first recessed portion, the second recessed portion and the third recessed portion, and thus a large space is assured in the chamber. Consequently, when the first member is connected with the third member and the second member is connected with the third member, the liquid gasket extruded from between the respective connected members to each of inner surfaces of the chamber is restricted from coming into contact with one another.

According to a further aspect of this disclosure, the chamber includes a portion which does not contain the liquid gasket.

Accordingly, the liquid is restricted more preferably from leaking out of the chamber.

According to a further aspect of this disclosure, the chamber includes a communication passage for discharging a liquid, which flows into the chamber, out of the chamber.

Accordingly, the chamber includes the communication passage for discharging the liquid out of the chamber. Thus, it is restricted that the chamber is filled with the liquid that leaks via or along the liquid gasket and comes into the chamber. Consequently, it is restricted that the liquid accumulated in the chamber comes into contact with the liquid gasket and leaks out of the chamber via or along the liquid gasket.

According to a further aspect of this disclosure, the seal structure further includes a step portion provided at an inner surface of the chamber. The step portion is positioned between any two of the first mating surface, the second mating surface and the third mating surface.

Accordingly, the liquid gasket is extruded from between the respective mating surfaces and moves to the step portion, and thus a greater sealing performance is achieved.

According to a further aspect of this disclosure, the first member is a cylinder block of an internal combustion engine, the second member is a cylinder head of the internal combustion engine and the third member is a timing chain cover of the internal combustion engine.

Accordingly, the liquid in a space formed by the cylinder block and the timing chain cover and by the cylinder head and the timing chain cover is restricted from leaking out of a mating portion of the timing chain cover.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a perspective view of an engine of a first embodiment disclosed here;

Fig. 2 is a side view of the engine of the first embodiment in a state where a head cover, a crankcase, an oil pan and a timing chain cover are taken off from the engine;

Fig. 3 is an enlarged partial view of a seal structure of a mating portion of three mating surfaces shown in Fig. 2 according to the first embodiment;

Fig. 4A is a cross-sectional view taken along line IVA-IVA of Fig. 3 and illustrates the first embodiment including the timing chain cover to be assembled, that is, before the timing chain cover is assembled;

Fig. 4B is a cross-sectional view taken along line IVB-IVB of Fig. 3 and illustrates the first embodiment after the timing chain cover is assembled;

Fig. 5A is a cross sectional view of a seal structure of a mating portion of three mating surfaces according to a first variation of the first embodiment including the timing chain cover to be assembled, that is, before the timing chain cover is assembled;

Fig. 5B is a cross sectional view of the seal structure of the mating portion of the three mating surfaces according to the first variation of the first embodiment, after the timing chain cover is assembled;

Fig. 6 is a cross sectional view of a seal structure of a mating portion of three mating surfaces according to a second variation of the first embodiment, after a timing chain cover is assembled;

Fig. 7 is a cross sectional view of a seal structure of a mating portion of three mating surfaces according to a third variation of the first embodiment, after a timing chain cover is assembled;

Fig. 8 is a cross sectional view of a seal structure of a mating portion of three mating surfaces according to a fourth variation of the first embodiment, after a timing chain cover is assembled;

Fig. 9A is an enlarged partial view of a seal structure of a mating portion of three mating surfaces according to a second embodiment disclosed here; and

Fig. 9B is a cross-sectional view taken along line IXB-IXB of Fig. 9A and illustrates the second embodiment, after a timing chain cover is assembled.

### DETAILED DESCRIPTION

A seal structure 20 of a mating portion of three mating surfaces according to a first embodiment of this disclosure includes a cylinder block 2 (i.e., a first member) having a mating surface 9 (i.e., a first mating surface), a cylinder head 4 (i.e., a second member) connected with the cylinder block 2 and having a mating surface 10 (i.e., a second mating surface), a timing chain cover 8 (i.e., a third member) connected with the cylinder block 2 and with the cylinder head 4 and having a mating surface 11 (i.e., a third mating surface), and a liquid gasket 30 interposed between the mating surface 9 and the mating surface 11 and between the mating surface 10 and the mating surface 11. At least one of the mating surface 9, the mating surface 10, and the mating surface 11 is formed with a chamber 27 that separates the liquid gasket 30.

In other words, the seal structure 20 includes the cylinder block 2 having the mating surface 9, the cylinder head 4 having the mating surface 10, the timing chain cover 8 having the mating surface 11. Each of the mating surface 9, the mating surface 10 and the mating surface 11 is formed into a shape so as to face-contact with the mating surface that faces the mating surface 9, the mating surface 10 and the mating surface 11, respectively. The cylinder block 2, the cylinder head 4 and the timing chain cover 8 are assembled to one another while applying the liquid gasket 30 between the cylinder block 2 and the timing chain cover 8, and between the cylinder head 4 and the timing chain cover 8. At least one of the mating surface 9, the mating surface 10 and the mating surface 11 is formed with the chamber 27 for accommodating part of the liquid gasket 30 so that the liquid gasket 30 is restricted from leaking out of the mating surface 9, the mating surface 10 and the mating surface 11 of the cylinder block 2, the cylinder head 4 and the chain cover 8 respectively in the assembly. The chamber 27 includes a portion that does not contain the liquid gasket 30, that is, the portion which includes, for example, air. The seal structure 20 of the first embodiment will be explained with reference to the accompanying drawings.

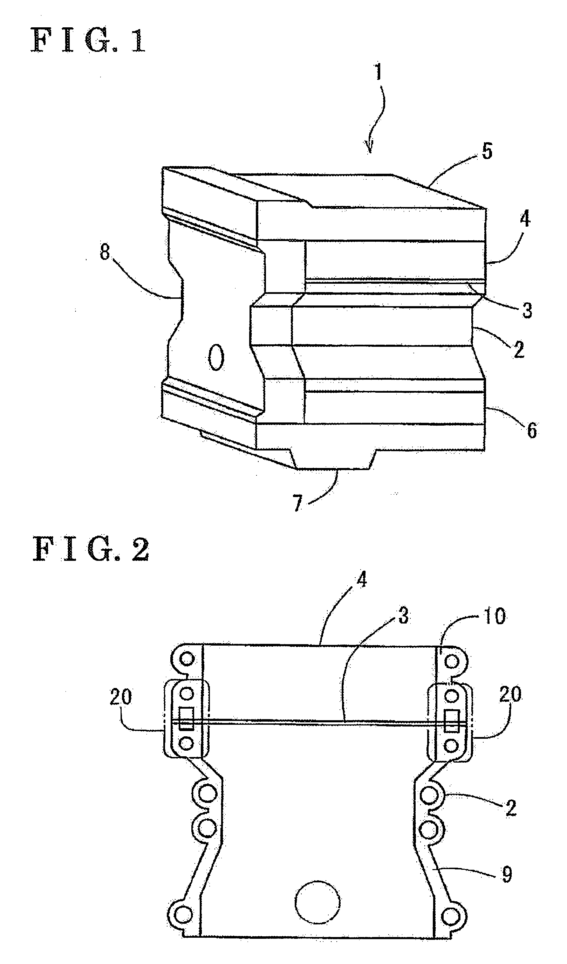

(First embodiment) As shown in Fig. 1, an engine 1 (i.e., an internal combustion engine) includes the cylinder block 2 to which the cylinder head 4 is fastened in a manner that the cylinder head 4 is positioned on the cylinder block 2 while having a plate gasket 3 interposed between the cylinder block 2 and the cylinder head 4. A head cover 5 is fastened to an upper portion of the cylinder head 4. A crankcase 6 is fastened to a lower portion of the cylinder block 2. An oil pan 7 is fastened to a lower portion of the crankcase 6. The timing chain cover 8 is fastened to the cylinder block 2, the plate gasket 3, the cylinder head 4 and the crankcase 6, which are in an assembled state, in a manner that the timing chain cover 8 is located on the left side when viewed in Fig. 1.

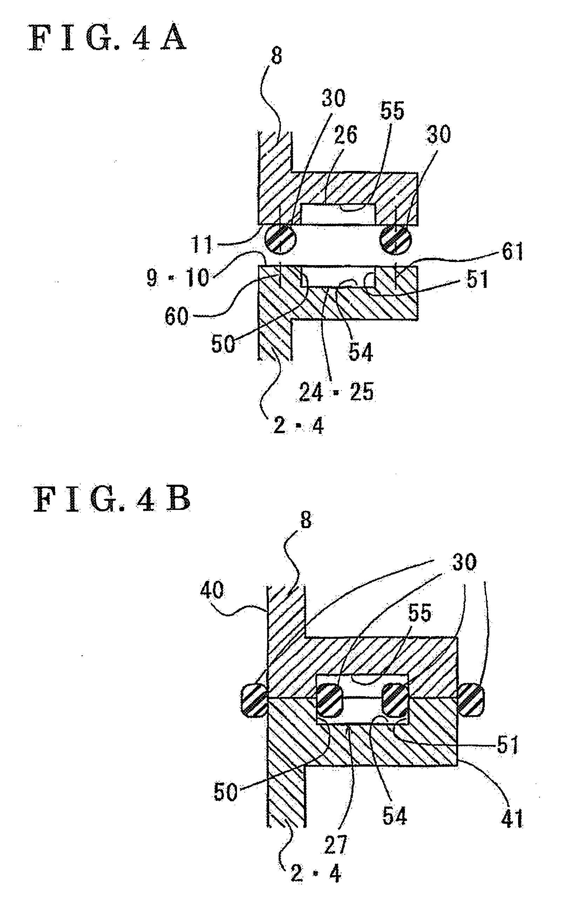

As shown in Fig. 2, the cylinder block 2 and the cylinder head 4 are assembled to each other while having the plate gasket 3 interposed therebetween. The cylinder block 2 includes the mating surface 9 that is perpendicular to the plate gasket 3. The cylinder head 4 includes the mating surface 10 that is perpendicular to the plate gasket 3 and is flush with the mating surface 9. The timing chain cover 8 includes the mating surface 11 (refer to Fig. 4) that faces the mating surface 9 and the mating surface 10, both of which are flush with each other.

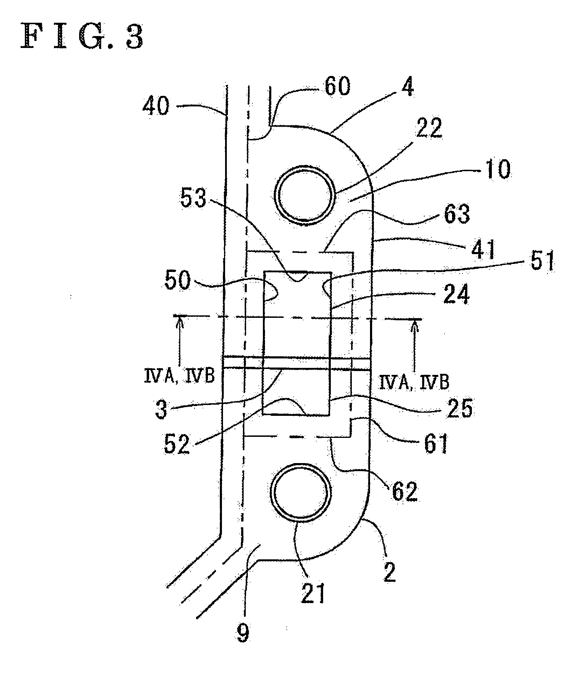

As shown in Fig. 3, the cylinder block 2, the cylinder head 4 and the timing chain cover 8 are fastened to one another via the liquid gasket 30 by means of plural bolts, that is, the liquid gasket 30 is interposed between the mating surface 9 and the mating surface 11, and between the mating surface 10 and the mating surface 11. The mating surface 9 includes a bolt hole 21 into which one of the plural bolts is inserted. The mating surface 10 includes a bolt hole 22 into which one of the plural bolts is inserted. As a timing chain rotates, an engine oil splashes and adheres to an engine inner surface 40.

As shown in Fig. 4A, the mating surface 10 includes a recessed portion 24 (i.e., a first recessed portion). The mating surface 9 includes a recessed portion 25 (i.e., a second recessed portion) formed so as to face the recessed portion 24 of the mating surface 10. A cross sectional shape of an opening of the recessed portion 24, that is, the cross sectional shape parallel to the plate gasket 3, is identical to that of the recessed portion 25. The mating surface 11 includes a recessed portion 26 (i.e., a third recessed portion) formed so as to face the recessed portions 24, 25. A cross sectional shape of an opening of the recessed portion 26, that is, the cross sectional shape perpendicular to the plate gasket 3, is identical to that of the recessed portions 24, 25 formed on the mating surfaces 10, 9.

As shown in Figs. 3, 4A and 4B, the chamber 27 is constituted by the recessed portion 24, the recessed portion 25 and the recessed portion 26. The chamber 27 includes inner surfaces 50, 51, 52, 53, 54, 55. As shown in Fig. 3, the inner surface 50 is perpendicular to the plate gasket 3 and is positioned in the vicinity of the engine inner surface 40. The inner surface 51 is perpendicular to the plate gasket 3 and is positioned in the vicinity of an engine outer surface 41. The inner surface 52 is parallel to the plate gasket 3 and is positioned in the vicinity of the bolt hole 21. The inner surface 53 is parallel to the plate gasket 3 and is positioned in the vicinity of the bolt hole 22. As shown in Fig. 4A, the inner surface 54 is perpendicular to the plate gasket 3 and is positioned at the recessed portions 24, 25. The inner surface 55 is perpendicular to the gasket 3 and is positioned at the recessed portion 26. As shown in Fig. 3, gasket application lines 60, 61, 62, 63, each of which is an imaginary line, are provided on the mating surfaces 9, 10 so as to be positioned around the chamber 27. The gasket application line 60 is positioned at a center between the inner surface 50 and the engine inner surface 40. The gasket application line 61 is positioned at a center between the inner surface 51 and the engine outer surface 41. The gasket application line 62 is positioned between the inner surface 52 and the bolt hole 21 in a manner that a distance between the inner surface 52 and the gasket application line 62 equals to a distance between the inner surface 50 and the gasket application line 60. The gasket application line 63 is positioned between the inner surface 53 and the bolt hole 22 in a manner that a distance between the inner surface 53 and the gasket application line 63 equals to a distance between the inner surface 50 and the gasket application line 60.

An operation, effects and advantages of the first embodiment will be explained hereunder. The liquid gasket 30 is applied to the mating surface 11 of the timing chain cover 8, at positions that correspond to the gasket application lines 60, 61, 62, 63. After the timing chain cover 8 is fastened to the cylinder block 2 and to the cylinder head 4 by means of the plural bolts including the bolts inserted into the bolt holes 21, 22, the mating surface 9 face-contacts with the mating surface 11 and the mating surface 10 face-contacts with the mating surface 11. At this time, part of the liquid gasket 30 applied to the mating surface 11, at the position corresponding to the gasket application line 60, is pushed out or extruded to the engine inner surface 40 and to the inner surface 50 of the chamber 27 as shown in Fig. 4B. An amount of the liquid gasket 30 pushed out to the engine inner surface 40 approximately equals to an amount of the liquid gasket 30 pushed out to the inner surface 50. In a manner similar to the above, after the mating surface 9 face-contacts with the mating surface 11 and the mating surface 10 face-contacts with the mating surface 11, part of the liquid gasket 30 applied to the mating surface 11, at the position corresponding to the gasket application line 61, is pushed out to the engine outer surface 41 and to the inner surface 51 of the chamber 27. An amount of the liquid gasket 30 pushed out to the engine outer surface 41 approximately equals to an amount of the liquid gasket 30 pushed out to the inner surface 51. After the mating surface 9 face-contacts with the mating surface 11 and the mating surface 10 face-contacts with the mating surface 11, part of the liquid gasket 30 applied to the mating surface 11, at the position corresponding to the gasket application line 62, is pushed out to the inner surface 52 of the chamber 27, and part of the liquid gasket 30 applied to the mating surface 11, at the position corresponding to the gasket application line 63, is pushed out to the inner surface 53 of the chamber 27.

By providing the liquid gasket 30 between the mating surface 9 and the mating surface 11, and between the mating surface 10 and the mating surface 11, a step or a gap generated between the mating surfaces due to the assembly is filled by the liquid gasket 30, and thus a reduction of a sealing performance may be restricted. Because a single chamber, that is, the chamber 27, is constituted by the recessed portion 24 of the mating surface 9, the recessed portion 25 of the mating surface 10 and the recessed portion 26 of the mating surface 11, a space whose capacity is larger than the amount of the liquid gasket 30 extruded is assured in the chamber 27. Thus, the liquid gasket 30 extruded to the inner surface 50 and the liquid gasket 30 extruded to the inner surface 51 are separated from each other by the chamber 27. The engine oil adhered to the engine inner surface 40 moves to the chamber 27 via or along the liquid gasket 30 existing between the engine inner surface 40 and the inner surface 50 and accumulates in the chamber 27. However, the engine oil accumulated in the chamber 27 is prevented from adhering to the liquid gasket 30 existing between the inner surface 51 and the engine outer surface 41. Consequently, the engine oil accumulated in the chamber 27 is restricted from leaking out to the engine outer surface 41 via or along the liquid gasket 30 existing between the inner surface 51 and the engine outer surface 41.

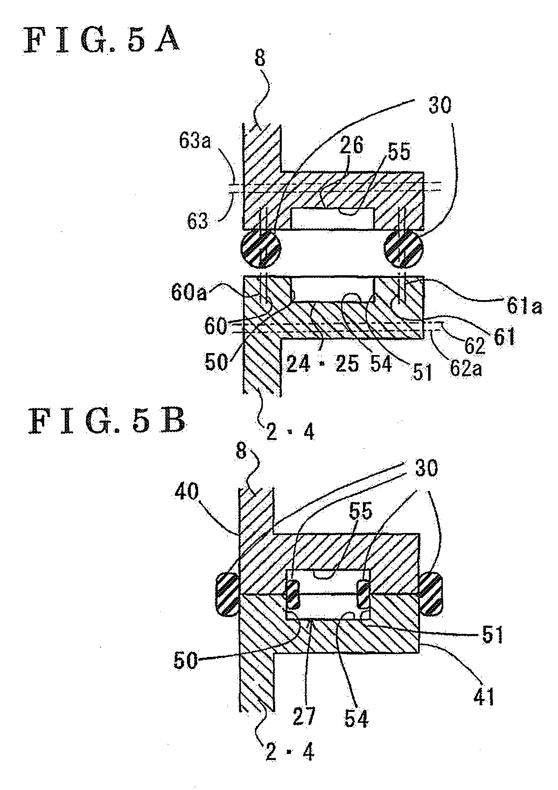

In a first variation of the first embodiment as shown in Figs. 5A and 5B, the identical numerical designations are given to the parts, the portions and the like having identical functions to those of the first embodiment.

A gasket application line 60a is positioned closer to the engine inner surface 40 than the gasket application 60 is positioned. A gasket application line 61a is positioned closer to the engine outer surface 41 than the gasket application line 61 is positioned. A gasket application line 62a is positioned closer to the bolt hole 21 than the gasket application 62 is positioned. A gasket application line 63a is positioned closer to the bolt hole 22 than the gasket application 63 is positioned.

An operation, effects and advantages of the first variation of the first embodiment will be explained hereunder. The liquid gasket 30 is applied to the mating surface 11 of the timing chain cover 8, at positions that correspond to the gasket application lines 60a, 61 a, 62a, 63a.

After fastening the cylinder block 2 and the timing chain cover 8, and fastening the cylinder head 4 and the timing chain cover 8 by means of the plural bolts, the mating surface 9 face-contacts with the mating surface 11 and the mating surface 10 face-contacts with the mating surface 11. At this time, part of the liquid gasket 30 applied to the mating surface 11, at the position corresponding to the gasket application line 60a, is pushed out or extruded to the engine inner surface 40 and to the inner surface 50 of the chamber 27 as shown in Fig. 5B. At this time, an amount of the liquid gasket 30 pushed out to the engine inner surface 40 is greater than the an amount of the liquid gasket 30 pushed out to the inner surface 50. In a manner similar to the above, after the mating surface 9 face-contacts with the mating surface 11 and the mating surface 10 face-contacts with the mating surface 11, part of the liquid gasket 30 applied to the mating surface 11, at the position corresponding to the gasket application line 61a, is pushed out to the engine outer surface 41 and to the inner surface 51 of the chamber 27. At this time, an amount of the liquid gasket 30 pushed out to the engine outer surface 41 is greater than the an amount of the liquid gasket 30 pushed out to the inner surface 51. Part of the liquid gasket 30 applied to the mating surface 11, at the position corresponding to the gasket application line 62a, is pushed out to the inner surface 52 of the chamber 27. At this time, an amount of the liquid gasket 30 extruded to the inner surface 52 is smaller than that in the first embodiment. Part of the liquid gasket 30 applied to the mating surface 11, at the position corresponding to the gasket application line 63a, is pushed out to the inner surface 53 of the chamber 27. At this time, an amount of the liquid gasket 30 extruded to the inner surface 53 is smaller than that in the first embodiment.

In the first variation of the first embodiment, the amount of the liquid gasket 30 pushed out or extruded to the chamber 27 is smaller than that in the first embodiment. Thus, the liquid gasket 30 extruded to the inner surface 50, the liquid gasket 30 extruded to the inner surface 51, the liquid gasket 30 extruded to the inner surface 52 and the liquid gasket 30 extruded to the inner surface 53 are restricted from coming into contact with one another.

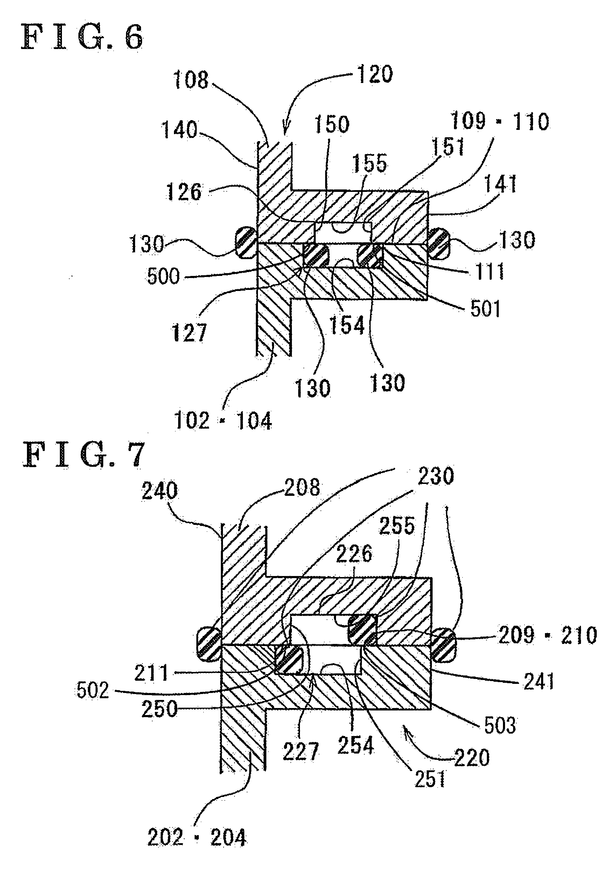

As shown in Fig. 6, a timing chain cover 108 (i.e., the third member) of a seal structure 120 of a mating portion of three mating surfaces according to a second variation of the first embodiment includes a recessed portion 126 (i.e., the third recessed portion). The recessed portion 126 is formed so as to have a smaller width compared to the recessed portion 26 of the first embodiment in a direction along a line IVA-IVA, IVB-IVB of Fig. 3, and thus to include a step portion 500 provided at an inner surface 150 and a step portion 501 provided at an inner surface 151. The step portions 500, 501 of the inner surfaces 150, 151 are provided in a manner that the timing chain cover 108 protrudes toward a center of a chamber 127 when viewed in Fig. 6. The chamber 127 includes the inner surface 150, the inner surface 151, an inner surface 154 and an inner surface 155.

An operation, effects and advantages of the second variation of the first embodiment will be explained hereunder. A liquid gasket 130 is applied to a mating surface 111 (i.e., the third mating surface) of the timing chain cover 108. After the timing chain cover 108 is fastened to a cylinder block 102 (i.e., the first member) and to a cylinder head 104 (i.e., the second member) by means of plural bolts, and thus, after a mating surface 109 (i.e., the first mating surface) face-contacts with the mating surface 111 and a mating surface 110 (i.e., the second mating surface) face-contacts with the mating surface 111, part of the liquid gasket 130 applied to the mating surface 111 is pushed out or extruded to an engine inner surface 140 and to the inner surface 150 of the chamber 127 as shown in Fig. 6. The liquid gasket 130 extruded to the inner surface 150 of the chamber 127 comes into contact with the mating surface 111, the inner surface 150 and the inner surface 154. In a manner similar to the above, after the timing chain cover 108 is fastened to the cylinder block 102 and to the cylinder head 104 by means of the plural bolts, and thus, after the mating surface 109 face-contacts with the mating surface 111 and the mating surface 110 face-contacts with the mating surface 111, part of the liquid gasket 130 applied to the mating surface 111 is pushed out or extruded to an engine outer surface 141 and to the inner surface 151 of the chamber 127. The liquid gasket 130 extruded to the inner surface 151 of the chamber 127 comes into contact with the mating surface 111, the inner surface 150 and the inner surface 154.

By providing the step portion 500 at the inner surface 150, the liquid gasket 130 comes in contact with the mating surface 111, the inner surface 150 and the inner surface 154, and thus a sealing surface is formed. In a manner similar to the above, by providing the step portion 501 at the inner surface 151, the liquid gasket 130 comes in contact with the mating surface 111, the inner surface 151, and the inner surface 154, and thus a sealing surface is formed. Thus, a sealing performance of the step portion 500 of the inner surface 150 of the chamber 127 and the step portion 501 of the inner surface 151 of the chamber 127 is improved. In the second variation of the first embodiment, the recessed portion 126 is formed so as to have the smaller width compared to the recessed portions 24, 25 of the first embodiment in the direction along the line IVA-IVA, IVB-IVB of Fig. 3, however, the recessed portion 126 may be formed so as to have a larger width compared to the recessed portions 24, 25 of the first embodiment.

As shown in Fig. 7, a timing chain cover 208 (i.e., the third member) of a seal structure 220 of a mating portion of three mating surfaces according to a third variation of the first embodiment includes a recessed portion 226 (i.e., the third recessed portion). The recessed portion 226 is formed by moving the recessed portion 26 of the first embodiment parallel with a mating surface 211 (i.e., the third mating surface) of the timing chain cover 208 toward the engine outer surface, thereby forming a step portion 502 on an inner surface 250 and a step portion 503 on an inner surface 251. When viewed in Fig. 7, the step portion 502 on the inner surface 250 is formed in a manner that the timing chain cover 208 protrudes toward a center of a chamber 227. The step portion 503 on the inner surface 251 is formed in a manner that a cylinder block 202 (i.e., the first member) and a cylinder head 204 (i.e., the second member) protrude toward the center of the chamber 227.

An operation, effects and advantages of the third variation of the first embodiment will be explained hereunder. A liquid gasket 230 is applied to the mating surface 211 of the timing chain cover 208. After the timing chain cover 208 is fastened to the cylinder block 202 and to the cylinder head 204 by means of the plural bolts, and thus, after a mating surface 209 (i.e., the first mating surface) face-contacts with the mating surface 211 and a mating surface 210 (i.e., the second mating surface) face-contacts with the mating surface 211, part of the liquid gasket 230 applied to the mating surface 211 is pushed out or extruded to an engine inner surface 240 and to the inner surface 250 of the chamber 227 as shown in Fig. 7. The liquid gasket 230 extruded to the inner surface 250 of the chamber 227 comes into contact with the mating surface 211, the inner surface 250 and an inner surface 254. In a manner similar to the above, after the timing chain cover 208 is fastened to the cylinder block 202 and to the cylinder head 204 by means of the plural bolts, and thus, after the mating surface 209 face-contacts with the mating surface 211 and the mating surface 210 face-contacts with the mating surface 211, part of the liquid gasket 230 applied to the mating surface 211 is pushed out or extruded to an engine outer surface 241 and to the inner surface 251 of the chamber 227. The liquid gasket 230 extruded to the inner surface 251 of the chamber 227 comes into contact with the mating surface 209, the mating surface 210, the inner surface 251 and an inner surface 255.

By providing the step portion 502 at the inner surface 250, the liquid gasket 230 comes in contact with the mating surface 211, the inner surface 250 and the inner surface 254, and thus a sealing surface is formed. In a manner similar to the above, by providing the step portion 503 at the inner surface 251, the liquid gasket 230 comes in contact with the mating surface 209, the mating surface 210, the inner surface 251, and the inner surface 255, and thus a sealing surface is formed. Thus, a sealing performance of the step portion 502 of the inner surface 250 of the chamber 227 and the step portion 503 of the inner surface 251 of the chamber 227 is improved. The recessed portion 226 is offset, that is, moved toward the engine outer surface 241 in the third variation of the first embodiment, however, on the contrary, the recessed portion 226 may be offset or moved toward the engine inner surface 240.

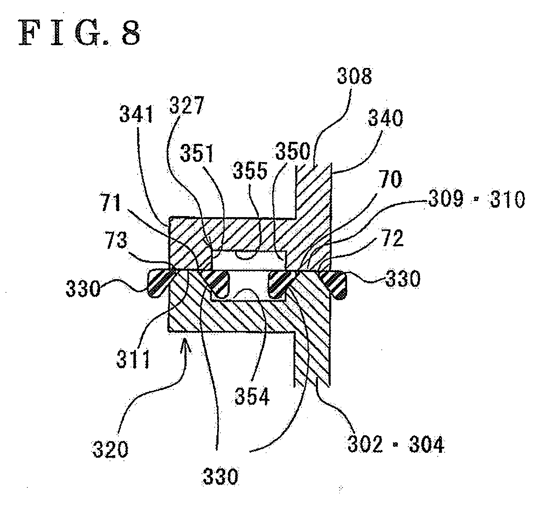

As shown in Fig. 8 illustrating a seal structure 320 of a mating portion of three mating surfaces according to a fourth variation of the first embodiment, an edge portion formed between mating surfaces 309, 310 (i.e., the first mating surface, the second mating surface) and an inner surface 350 is chamfered so as to form a chamfered portion 70. An edge portion formed between the mating surfaces 309, 310 and an inner surface 351 is chamfered so as to form a chamfered portion 71. An edge portion between the mating surfaces 309, 310 and an engine inner surface 340 is chamfered so as to form a chamfered portion 72. An edge portion between the mating surfaces 309, 310 and an engine outer surface 341 is chamfered so as to form a chamfered portion 73.

An operation, effects and advantages of the fourth variation of the first embodiment will be explained hereunder. A liquid gasket 330 is applied to a mating surface 311 (i.e., the third mating surface) of a timing chain cover 308 (i.e., the third member). After the timing chain cover 308 is fastened to a cylinder block 302 (i.e., the first member) and to a cylinder head 304 (i.e., the second member) by means of plural bolts, and thus, after a mating surface 309 (i.e., the first mating surface) face-contacts with the mating surface 311 and a mating surface 310 (i.e., the second mating surface) face-contacts with the mating surface 311, part of the liquid gasket 330 applied to the mating surface 311 is pushed out or extruded to the chamfered portion 72 positioned in the vicinity of the engine inner surface 340 and to the chamfered portion 70 positioned in the vicinity of the inner surface 350 of a chamber 327. The liquid gasket 330 pushed out to the chamfered portion 72 positioned in the vicinity of the engine inner surface 340 comes in contact with the mating surface 311 and the chamfered portion 72. The liquid gasket 330 pushed out to the chamfered portion 70 positioned in the vicinity of the inner surface 350 of the chamber 327 comes in contact with the mating surface 311 and the chamfered portion 70. In a manner similar to the above, after the mating surface 309 face-contacts with the mating surface 311 and the mating surface 310 face-contacts with the mating surface 311, part of the liquid gasket 330 applied to the mating surface 311 is pushed out or extruded to the chamfered portion 73 positioned in the vicinity of the engine outer surface 341 and to the chamfered portion 71 positioned in the vicinity of the inner surface 351 of the chamber 327. The chamber 327 includes the inner surface 350, the inner surface 351, an inner surface 354 and an inner surface 355. The liquid gasket 330 pushed out to the chamfered portion 73 positioned in the vicinity of the engine outer surface 341 comes in contact with the mating surface 311 and the chamfered portion 73. The liquid gasket 330 pushed out to the chamfered portion 71 positioned in the vicinity of the inner surface 351 comes in contact with the mating surface 311 and the chamfered portion 71.

By providing the chamfered portions 70, 71, 72, 73 at the mating surfaces 309, 310, the liquid gasket 330 forms sealing surfaces between the mating surface 311 and the chamfered portion 70, between the mating surface 311 and the chamfered portion 71, between the mating surface 311 and the chamfered portion 72, and between the mating surface 311 and the chamfered portion 73 respectively. Thus, a sealing performance of the engine inner surface 340, the inner surface 350, the inner surface 351 and the engine outer surface 341 is improved. In the fourth variation of the first embodiment, the chamfered portions 70, 71, 72, 73 are provided at the mating surfaces 309, 310, however, the chamfered portions 70, 71, 72, 73 may be formed at the mating surface 311.

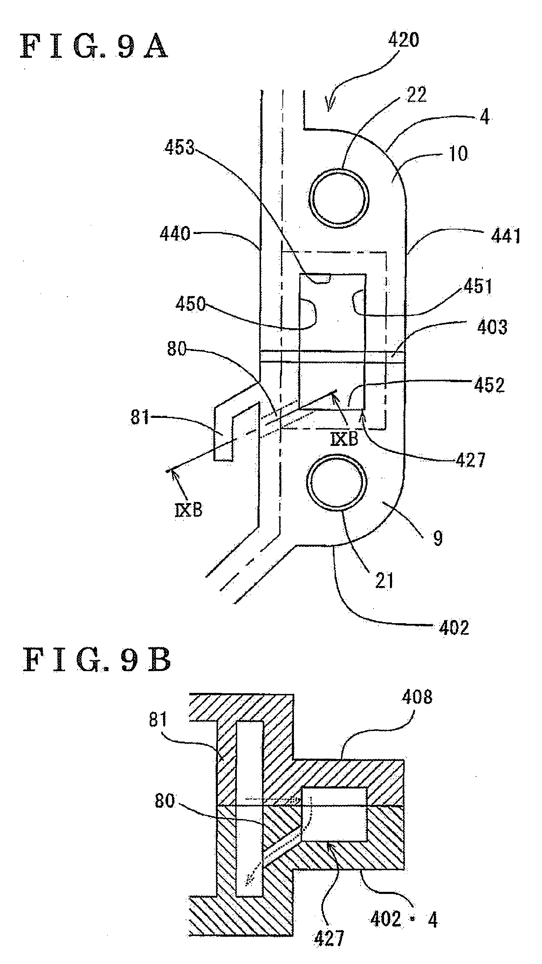

(Second embodiment) In a second embodiment, the identical numerical designations are given to the parts, the portions and the like having identical functions to those of the first embodiment. As shown in Figs. 9A and 9B illustrating a seal structure 420 of a mating portion of three mating surfaces according to the second embodiment, a communication passage 80 is formed at a cylinder block 402 (i.e., the first member), at a portion where an inner surface 450 of an chamber 427 and an inner surface 451 of the chamber 427 are abutted against each other, so that a fluid communication is established between the chamber 427 and an engine inner surface 440. The chamber 427 includes the inner surface 450, the inner surface 451, an inner surface 452 and an inner surface 453. The communication passage 80 includes a first opening portion provided at the chamber 427 and a second opening portion provided at the engine inner surface 440. The first opening portion is positioned higher in the direction of the gravity relative to the second opening portion and the second opening portion is positioned lower relative to the first opening portion. In addition, the engine inner surface 440 is provided with a rib member 81 covering the second opening portion of the communication passage 80 so that an area below the second opening portion in the direction of the gravity is opened, that is, the rib member 81 does not cover the second opening portion of the communication passage 80 from a downward direction.

An operation, effects and advantages of the second embodiment will be explained hereunder. As the timing chain rotates, the engine oil is splashed and adheres to the engine inner surface 440. The engine oil adhered to the engine inner surface 440 comes into the chamber 427 via or along a liquid gasket existing between the engine inner surface 440 and the inner surface 450. The engine oil in the chamber 427 flows downwardly in the direction of the gravity along the inner surface 450 and flows back, that is, is discharged, to the engine inner surface 440 via the communication passage 80. The engine oil that has flown into the chamber 427 flows back to the engine inner surface 440 appropriately, and thus the engine oil does not accumulate inside the chamber 427. The rib portion 81, which covers the second opening of the communication passage 80 from other directions than the downward direction, restricts the engine oil from coming into the communication passage 80 from the second opening portion.

By providing the communication passage 80 for discharging the engine oil from the chamber 427 to the engine inner surface 440, it is restricted that the chamber 427 is filled with the engine oil that leaks and comes into the chamber 427 via or along the liquid gasket. Thus, the engine oil accumulated in the chamber 427 is restricted from coming into contact with a liquid gasket existing in a vicinity of an engine outer surface 441 and then restricted from leaking out of the chamber 427 to the engine outer surface 441 via or along the liquid gasket existing in the vicinity of the engine outer surface 441. In the second embodiment, the communication passage 80 is formed at the cylinder block 402, however, the communication passage 80 may be formed at a timing chain cover 408 (i.e., the third member). In addition, in the second embodiment, the communication passage 80 is formed at the cylinder block 402, at the portion where the inner surface 450 of the chamber 427 and the inner surface 451 of the chamber 427 are abutted against each other, so that the fluid communication is established between the chamber 427 and the engine inner surface 440. However, as long as the communication passage 80 is positioned lower in the direction of the gravity relative to a plate gasket 403 interposed between the cylinder block 402 and the cylinder head 4, the communication passage 80 may be formed at other.

## Claims

1. A seal structure (20, 120, 220, 320, 420), comprising:
a first member (2, 102, 202, 302, 402) including a first mating surface (9, 109, 209, 309);
a second member (4, 104, 204, 304) connected with the first member (2, 102, 202, 302, 402)
and including a second mating surface (10, 110, 210, 310);
a third member (8, 108, 208, 308, 408) connected with the first member (2, 102, 202, 302, 402) and with the second member (4, 104, 204, 304),
and including a third mating surface (11, 111, 211, 311);
said first member (2, 102, 202, 302, 402) includes a first recessed portion (24) formed on the first mating surface (9, 109, 209, 309),
said second member (4, 104, 204, 304) includes a second recessed portion (25) formed on the second mating surface (10, 110, 210, 310) and facing the first recessed portion (24),
said third member (8, 108, 208, 308, 408) includes a third recessed portion (26, 126, 226) formed on the third mating surface (11, 111, 211, 311) and facing the first recessed portion (24) and the second recessed portion (25), and
a chamber (27, 127, 227, 327, 427) constituted by the first recessed portion (24), the second recessed portion (25) and the third recessed portion (26, 126, 226); and
a liquid gasket (30, 130, 230, 330) interposed between the first mating surface (9, 109, 209, 309) and the third mating surface (11, 111, 211, 311), and between the second mating surface (10, 110, 210, 310) and the third mating surface (11, 111, 211, 311), **characterised in that**
at least one of the first mating surface (9, 109, 209, 309), the second mating surface (10, 110, 210, 310) and the third mating surface (11, 111, 211, 311) is formed with said chamber (27, 127, 227, 327, 427) separating the liquid gasket (30, 130, 230, 330),

2. The seal structure (20, 120, 220, 320, 420) according to claim 1, wherein
the chamber (27, 127, 227, 327, 427) includes a communication passage (80) for discharging a liquid, which flows into the chamber (27, 127, 227, 327, 427), out of the chamber (27, 127, 227, 327, 427).

3. The seal structure (20, 120, 220, 320, 420) according to claim 1 or 2, further compris-ing:
a step portion (500, 501, 502, 503) provided at an inner surface (150, 151, 250, 251, 350, 351, 450, 451) of the chamber (27, 127, 227, 327, 427), the step portion (500, 501, 502, 503) being positioned between any two of the first mating surface (9, 109, 209, 309), the second mating surface (10, 110, 210, 310) and the third mating surface (11, 111, 211, 311).

4. The seal structure (20, 120, 220, 320, 420) according to any one of claims 1 and 3, wherein
the first member (2, 102, 202, 302, 402) is a cylinder block (2, 102, 202, 302, 402) of an internal combustion engine (1), the second member (4, 104, 204, 304) is a cylinder head (4, 104, 204, 304) of the internal combustion engine (1) and the third member (8, 108, 208, 308, 408) is a timing chain cover (8, 108, 208, 308, 408) of the internal combustion engine (1).

## Patentansprüche

1. Dichtungsstruktur (20, 120, 220, 320, 420), mit
einem ersten Bauteil (2, 102, 202, 302, 402), das eine erste Anschlussfläche (9, 109, 209, 309) enthält,
einem zweiten Bauteil (4, 104, 204, 304), das mit dem ersten Bauteil (2, 102, 202, 302, 402) verbunden ist und eine zweite Anschlussfläche (10, 110, 210, 310) enthält,
einem dritten Bauteil (8, 108, 208, 308, 408), das mit dem ersten Bauteil (2, 102, 202, 302, 402) und dem zweiten Bauteil (4, 104, 204, 304) verbunden ist und eine dritte Anschlussfläche (11, 111, 211, 311) enthält,
wobei das erste Bauteil (2, 102, 202, 302, 402) einen ersten ausgenommenen Teil (24) enthält, der an der ersten Anschlussfläche (9, 109, 209, 309) ausgebildet ist,
wobei das zweite Bauteil (4, 104, 204, 304) einen zweiten ausgenommenen Teil (25) enthält, der an der zweiten Anschlussfläche (10, 110, 210, 310) ausgebildet ist und dem ersten ausgenommenen Teil (24) gegenüberliegt,
wobei das dritte Bauteil (8, 108, 208, 308, 408) einen dritten ausgenommenen Teil (26, 126, 226) enthält, der an der dritten Anschlussfläche (11, 111, 211, 311) ausgebildet ist und dem ersten ausgenommenen Teil (24) und dem zweiten ausgenommenen Teil (25) gegenüberliegt, und
wobei eine Kammer (27, 127, 227, 327, 427) durch den ersten ausgenommenen Teil (24), dem zweiten ausgenommenen Teil (25) und dem dritten ausgenommenen Teil (26, 126, 226) gebildet wird, und
einer Flüssigkeitsdichtung (30, 130, 230, 330), die zwischen der ersten Anschlussfläche (9, 109, 209, 309) und der dritten Anschlussfläche (11, 111, 211, 311) eingefügt ist und zwischen der zweiten Anschlussfläche (10, 110, 210, 310) und der dritten Anschlussfläche (11, 111, 211, 311) eingefügt ist,
**dadurch gekennzeichnet, dass**
zumindest eine von der ersten Anschlussfläche (9, 109, 209, 309), der zweiten Anschlussfläche (10, 110, 210, 310) und der dritten Anschlussfläche (11, 111, 211, 311) mit der Kammer (27, 127, 227, 327, 427) ausgebildet ist, die die Flüssigkeitsdichtung (30, 130, 230, 330) separiert.

2. Dichtungsstruktur (20, 120, 220, 320, 420) nach Anspruch 1, bei der
die Kammer (27, 127, 227, 327, 427) eine Verbindungspassage (80) zum Abführen einer in die Kammer (27, 127, 227, 327, 427) fließende Flüssigkeit aus der Kammer (27, 127, 227, 327, 427) enthält.

3. Dichtungsstruktur (20, 120, 220, 320, 420) nach Anspruch 1 oder 2, die weiter aufweist
einen Stufenteil (500, 501, 502, 503), der an einer inneren Fläche (150, 151, 250, 251, 350, 351, 450, 451) der Kammer (27, 127, 227, 327, 427) vorgesehen ist, wobei der Stufenteil (500, 501, 502, 503) zwischen zwei beliebigen der ersten Anschlussfläche (9, 109, 209, 309), der zweiten Anschlussfläche (10, 110, 210, 310) und der dritten Anschlussfläche (11, 111, 211, 311) positioniert ist.

4. Dichtungsstruktur (20, 120, 220, 320, 420) nach einem der Ansprüche 1 bis 3, bei der
das erste Bauteil (2, 102, 202, 302, 402) ein Zylinderblock (2, 102, 202, 302, 402) eines Verbrennungsmotors (1) ist, das zweite Bauteil (4, 104, 204, 304) ein Zylinderkopf (4, 104, 204, 304) des Verbrennungsmotors (1) ist, und das dritte Bauteil (8, 108, 208, 308, 408) eine Steuerkettenabdeckung des Verbrennungsmotors (1) ist.

## Revendications

1. Structure de joint (20, 120, 220, 320, 420) comprenant :
un premier élément (2, 102, 202, 302, 402) incluant une première surface de contact (9, 109, 209, 309) ;
un deuxième élément (4, 104, 204, 304) relié au premier élément (2, 102, 202, 302, 402) et incluant une deuxième surface de contact (10, 110, 210, 310) ;
un troisième élément (8, 108, 208, 308, 408) relié au premier élément (2, 102, 202, 302, 402) et au deuxième élément (4, 104, 204, 304), et incluant une troisième surface de contact (11, 111, 211, 311) ;
ledit premier élément (2, 102, 202, 302, 402) inclut une première partie évidée (24) formée sur la première surface de contact (9, 109, 209, 309),
ledit deuxième élément (4, 104, 204, 304) inclut une deuxième partie évidée (25) formée sur la deuxième surface de contact (10, 110, 210, 310) et faisant face à la première partie évidée (24),
ledit troisième élément (8, 108, 208, 308, 408) inclut une troisième partie évidée (26, 126, 226) formée sur la troisième surface de contact (11, 111, 211, 311) et faisant face à la première partie évidée (24) et à la deuxième partie évidée (25), et
une chambre (27, 127, 227, 327, 427) constituée par la première partie évidée (24), la deuxième partie évidée (25) et la troisième partie évidée (26, 126, 226) ; et
un joint d'étanchéité liquide (30, 130, 230, 330) intercalé entre la première surface de contact (9, 109, 209, 309) et la troisième surface de contact (11, 111, 211, 311), et entre la deuxième surface de contact (10, 110, 210, 310) et la troisième surface de contact (11, 111, 211, 311), **caractérisée en ce que**
au moins l'une parmi la première surface de contact (9, 109, 209, 309), la deuxième surface de contact (10, 110, 210, 310) et la troisième surface de contact (11, 111, 211, 311) est formée avec ladite chambre (27, 127, 227, 327, 427) séparant le joint d'étanchéité liquide (30, 130, 230, 330).

2. Structure de joint (20, 120, 220, 320, 420) selon la revendication 1, dans laquelle la chambre (27, 127, 227, 327, 427) inclut un passage de communication (80) destiné à évacuer un liquide qui s'écoule dans la chambre (27, 127, 227, 327, 427), hors de la chambre (27, 127, 227, 327, 427).

3. Structure de joint (20, 120, 220, 320, 420) selon la revendication 1 ou 2, comprenant en outre :
une partie formant épaulement (500, 501, 502, 503) prévue en une surface intérieure (150, 151, 250, 251, 350, 351, 450, 451) de la chambre (27, 127, 227, 327, 427), la partie formant épaulement (500, 501, 502, 503) étant positionnée entre deux quelconques parmi la première surface de contact (9, 109, 209, 309), la deuxième surface de contact (10, 110, 210, 310) et la troisième surface de contact (11, 111, 211, 311).

4. Structure de joint (20, 120, 220, 320, 420) selon l'une quelconque des revendications 1 et 3, dans laquelle le premier élément (2, 102, 202, 302, 402) est un bloc-cylindres (2, 102, 202, 302, 402) de moteur à combustion interne (1), le deuxième élément (4, 104, 204, 304) est une culasse (4, 104, 204, 304) du moteur à combustion interne (1) et le troisième élément (8, 108, 208, 308, 408) est un couvercle de chaîne de distribution (8, 108, 208, 308, 408) du moteur à combustion interne (1).
